# EUROPEAN PATENT APPLICATION

(11) **EP 2 261 177 A1**
(43) Date of publication of application: **15.12.2010**
(21) Application number: 09162509.5
(22) Date of filing: 11.06.2009
(51) Int. Cl.: C01F 7/00, B01J 23/00

(54) **Layered double hydroxide, its preparation and use**

(71) Applicant: Akzo Nobel Chemicals International B.V., 3811 MH Amersfoort (NL)
(72) Inventor: Schomaker, Elwin, 6828 EH Arnhem (NL); Talma, Auke Gerardus, 7437 PM Bathmen (NL); Bruijn, Simon, 7411 GP Deventer (NL); van Agterveld, Dimitri Theodoor Leon, 7328 DW Apeldoorn (NL); Winters, Robin, 6681 EM Bemmel (NL)
(74) Representative: Schalkwijk, Pieter Cornelis

(57) **Abstract**

Layered double hydroxide containing brucite-like main layers alternating with interlayers, said brucite-like main layers containing at least one trivalent metal and at least one divalent metal selected from the group consisting of Mg, Zn, and Ni, and said interlayers comprising a tetrahedrally coordinated trivalent metal.

Said layered double hydroxide can be prepared by solvothermally treating a slurry or solution comprising at least one trivalent metal source and at least one divalent metal source selected from magnesium sources, zinc sources, and nickel sources; the molar ratio divalent metal/trivalent metal in the slurry or solution being in the range from 0.7 to 1.6.

## Description

The present invention relates to a new layered double hydroxide, its preparation and use.

Layered double hydroxides - also called: anionic clays - have a crystal structure consisting of positively charged layers built up of specific combinations of metal hydroxides between which there are anions and water molecules. Hydrotalcite is an example of a naturally occurring anionic clay wherein carbonate is the predominant anion present. Meixnerite is an anionic clay wherein hydroxyl is the predominant anion present.

In layered double hydroxides brucite-like main layers are built up of octahedra alternating with interlayers containing water molecules and charge-balancing anions. These charge-balancing anions compensate for the electrostatic charge deficiencies of the crystalline clay sheets of the layered double hydroxide. Examples of anions are NO₃⁻, OH⁻, Cl⁻, Br⁻, I⁻, SO₄²⁻, SiO₃²⁻, CrO₄²⁻, BO₃²⁻, MnO₄⁻, HGaO₃²⁻, HVO₄²⁻, ClO₄⁻, BO₃²⁻, pillaring anions such as V₁₀O₂₈⁻⁶ and Mo₇O₂₄⁶⁻, monocarboxylates such as acetate, dicarboxylates such as oxalate, alkyl sulphonates such as lauryl sulphonate.

The general structure of a conventional layered double hydroxide is

[M(II)ₘ²⁺ M(III)ₙ³⁺ (OH)₂ₘ₊₂ₙ.](X_{n/z}^{z-}). bH₂O

wherein M(II) is a divalent metal, M(III) is a trivalent metal, X^{z-} is the charge-balancing anion, b has a value of about 4, and m and n have a value such that m/n= 2 to 4, most preferably close to 3.

The preparation of anionic clays has been described in many publications. Two major reviews of anionic clay chemistry were published in which the methods available for anionic clay synthesis have been summarized:
F. Cavani et al "Hydrotalcite-type anionic clays: Preparation, Properties and Applications," Catalysis Today, 11 (1991) Elsevier Science Publishers B.V. Amsterdam.
J P Besse and others, "Anionic clays: trends in pillary chemistry," in M.I. Occelli, H.E. Robson, eds., Synthesis and Microporous Solids (1992), 2, 108, Van Nostrand Reinhold, N.Y.

In these reviews the authors state that a characteristic of Mg-Al anionic clays is that mild calcination at 500°C results in the formation of a disordered MgO-like product. Said disordered MgO-like product is distinguishable from spinel (which results upon severe calcination) and from anionic clays. This disordered MgO-like material is also referred to as Mg-Al solid solution. The formation of these solid solutions is reversible, which means that their exposure to water results in the re-formation of the anionic clay structure.

Two types of anionic clay preparation are described in these reviews. The most conventional method is co-precipitation of a soluble divalent metal salt and a soluble trivalent metal salt, optionally followed by hydrothermal treatment or aging to increase the crystallite size. The second method is the salt-oxide method in which a divalent metal oxide is reacted at atmospheric pressure with a soluble trivalent metal salt, followed by aging under atmospheric pressure. This method has only been described for the use of ZnO and CuO in combination with soluble trivalent metal salts.

Several patent applications relating to the production of anionic clays from inexpensive raw materials have been published. These materials include magnesium oxide and aluminium trihydrate. See, for example, WO 99/41198, WO 99/41196, WO 99/41195, WO 99/41197, WO 01/012550, WO 01/012543, and WO 02/064504.

According to these documents, anionic clays can be prepared by treating an aqueous slurry of divalent metal source, e.g. magnesium oxide, and trivalent metal source, e.g. aluminium trihydrate, at thermal (<100°C) or hydrothermal (>100°C) conditions. These documents further suggest that the divalent metal to trivalent metal molar ratio in said slurry may vary from 0.1 to 10, preferably 1 to 6, more preferably 2 to 4. However, the examples only disclose processes in which this ratio is between 2 and 3, generally 2.3 or 2.5. Enabling disclosures of processes using other ratios are not available.

It has now been found that solvothermal processes using a lower divalent to trivalent metal ratio - 0.7 to 1.6 - results in a new type of layered double hydroxide. This layered double hydroxide contains trivalent metal in tetrahedral coordination in the interlayer.

The invention therefore relates to a layered double hydroxide containing brucite-like main layers alternating with interlayers, said brucite-like main layers containing at least one trivalent metal and at least one divalent metal selected from the group consisting of Mg, Zn, and Ni, and said interlayers comprising a tetrahedrally coordinated trivalent metal.

The layered double hydroxide according to the invention cannot be intercalated by anions - or can be intercalated only to a very limited extent. This means that it cannot be intercalated by carbonate ions from the atmosphere. Hence, it is more stable than, for instance, layered double hydroxides with hydroxyl anions in the interlayer, because intercalation of carbonate ions can cause the latter to deteriorate.

Furthermore, the layered double hydroxide according to the present invention is a solid base which successfully acts as basic catalyst in, for instance, aldol condensations. Because it cannot be intercalated, the layered double hydroxide is able to keep its basic sides and is not easily poisoned.

In addition, the layered double hydroxide according to the invention is thermally stable. In contrast to conventional layered double hydroxides, heating up to 200°C does not result in a collapse of the interlayer.

Further, this layered double hydroxide can be obtained in rather pure form, i.e. with no or only minor amounts of divalent or trivalent metal source impurities.

The layered double hydroxide according to the invention contains layers containing one or more divalent metals and one or more trivalent metals and interlayers containing one or more tetrahedrally coordinated trivalent metals. Suitable trivalent metals include aluminium, gallium, indium, iron, chromium, vanadium, cobalt, manganese, cerium, niobium, lanthanum, and combinations of one or more of these metals. The preferred trivalent metal is aluminium.

The divalent metal is selected from the group consisting of magnesium, zinc, nickel, and combinations thereof. Preferred divalent metals are magnesium and zinc. The most preferred divalent metal is magnesium.

The layered double hydroxide of the present invention differs from conventional ones in that it contains tetrahedrally coordinated trivalent metal in the interlayer. This can be seen with ²⁷Al MAS NMR. A normal AL-containing layered double hydroxide shows only a peak at about 5-15 ppm, representing octahedrally coordinated aluminium, originating from the aluminium cations that are present in the brucite-like main layers. An Al-containing layered double hydroxide of the present invention also shows a broad band in between 40-80 ppm, recognized by the man skilled in the art as proof of the presence of tetrahedrally coordinated aluminium

Another important feature of the layered double hydroxide of the present invention is that the apparent c-axis, as determined by XRD, is significantly smaller, compared to its OH- and CO₃⁻ intercalated counterparts. In the case of Mg/Al-based layered double hydroxides according to the present invention, the apparent c-axis is 7.3-7.4, whereas it is 7.5-7.8 for the OH⁻, and CO₃⁻ Mg/Al layered double hydroxides.

The exact structure is the subject of further research, but judging from the experimentally found Al_{oct}/Alₜₑₜ ratios, it is hypothesized that tetrahedrally coordinated aluminium species act as a counterbalancing/pillaring anion for the cationic main layers.

There are several ways to prepare the layered double hydroxide according to the invention. What all preparation methods have in common is that the process involves a solvothermal step, i.e. a step which involves treatment of a slurry or solution of a mixture of divalent cationic source and a trivalent cationic source, preferably an oxide or a hydroxide, at a temperature of at least 100°C; the divalent to trivalent metal molar ratio - i.e. M(II)/M(III) - in the preparation process ranging from 0.7 to 1.6, preferably from 0.8 to 1.4, and most preferably 0.9 to 1.3.

The term "solvothermal treatment" refers to the treatment of a suspension/slurry or solution at a pressure above atmospheric pressure and a temperature which generally is above the boiling point of the slurry or solution at atmospheric pressure. The pressure generally is from 1 bar to 200 bar, preferably from 2 bar to 100 bar, even more preferably from 3 bar to 10 bar, and most preferably autogenous. Generally, the temperature is 100°C or higher, preferably from 100°C to 300°C, more preferably from 110°C to 250°C, and most preferably from 120°C to 200°C. The suspending medium for preparing the slurry or solution can be any suitable suspending medium known in the art. Suitable suspending media include water, organic solvents, and mixtures thereof. Examples of suitable organic solvents are alcohols such as methanol, ethanol, 1-propanol, and isopropanol; alkoxylated alcohols such as propylene glycol monomethyl ether and propylene glycol monoethyl ether; alkanes such as pentane, hexane, and heptane; and aromatic hydrocarbons such as benzene, toluene, and xylene. Preferably, the suspending medium comprises water, an alcohol and/or an alkoxylated alcohol. Most preferably, the suspending medium is water.

A solvothermal treatment in a suspending medium comprising water is also referred to as a "hydrothermal treatment".

A first method for preparing the layered double hydroxide according to the invention involves the solvothermal treatment of a slurry comprising (i) an existing conventional layered double hydroxide (i.e. one that does not contain tetrahedrally coordinated trivalent metal in the interlayer) and (ii) a trivalent metal source. The molar ratio divalent metal/trivalent metal in this slurry (i.e.: counting the divalent metal in the layered double hydroxide and the trivalent metal in both the layered double hydroxide and the trivalent metal source) should be in the range 0.7 to 1.6, preferably 0.8 to 1.4, and most preferably 0.9 to 1.3. This treatment should be performed for 0.5-48 hours, preferably 1-24 hrs, and most preferably 2-6 hours.

Although any conventional layered double hydroxide can be used for this purpose, it is preferred to use a layered double hydroxide with hydroxyl anions in the interlayer.

Further, it will be clear that if the objective is to make a Mg-Al layered double hydroxide with tetrahedrally coordinated aluminium in the interlayer, a Mg-Al layered double hydroxide and an aluminium source should be used. Suitable aluminium sources are listed below.

A second method involves the solvothermal treatment of an impure layered double hydroxide material that already contains trivalent metal source as impurity. This impurity may be the result of incomplete reaction of the trivalent metal source during preparation of said layered double hydroxide. If the divalent metal/trivalent metal molar ratio in this impure layered double hydroxide material is in the range 0.7 to 1.6, preferably 0.8 to 1.4, and most preferably 0.9 to 1.3, this impure material can be solvothermally treated as above without the need to add trivalent metal source. If the divalent metal/trivalent metal in this impure layered double hydroxide material is outside the desired range, additional trivalent metal source may be added to the slurry that is to be solvothermally treated.

A third method involves the solvothermal treatment of a slurry or solution comprising a divalent metal source and a trivalent metal source, the molar ratio divalent metal/trivalent metal in the slurry or solution ranging from 0.7 to 1.6, preferably 0.8 to 1.4, and most preferably 0.9 to 1.3. This results in the direct formation of a layered double hydroxide according to the present invention. This treatment should be performed for 0.5-48 hours, preferably 1-24 hrs, and most preferably 2-6 hours.

Suitable trivalent metal sources for use in the above-described methods are oxides, hydroxides, carbonates, nitrates, chlorides, chlorohydrates, and alkoxides of the trivalent metal and combinations thereof. Also bare metal may be used. Preferred trivalent metal compounds are oxides, hydroxides, carbonates, bicarbonates, hydroxycarbonates, and (hydroxy)acetates, as these materials are relatively inexpensive. Moreover, these materials do not leave undesirable anions in the layered double hydroxide which either have to be washed out or will be emitted as environmentally harmful gases upon heating.

Examples of suitable aluminium sources include aluminium alkoxide, aluminium oxides and hydroxides such as transition aluminas, aluminium trihydroxides (gibbsite, nordstrandite, bayerite) and their thermally treated forms (including flash-calcined alumina), alumina sols, amorphous alumina, aluminium oxohydroxides such as (pseudo)boehmite, diaspore, and goethite, aluminium-containing clays such as kaolin, sepiolite, and modified clays such as metakaolin, aluminium metal such as recycle aluminium, and aluminium salts such as aluminium nitrate, aluminium chloride, aluminium chlorohydrate, sodium aluminate, and aluminium sulphate. With the preparation method according to the invention it is also possible to use coarser grades of aluminium trihydrate such as BOC (Bauxite Ore Concentrate) or bauxite. The preferred aluminium source is aluminium trihydroxide, also called aluminium trihydrate, such as gibbsite, nordstrandite, and bayerite. Combinations of two or more of the above-mentioned aluminium sources may also be used.

Suitable divalent metal sources for use in the above-described methods are oxides, hydroxides, carbonates, nitrates, and chlorides of the divalent metal and combinations thereof. Also bare metals may be used. Preferred divalent metal compounds are oxides, hydroxides, carbonates, hydroxycarbonates, bicarbonates, and (hydroxy)acetates, as these materials are relatively inexpensive. Moreover, these materials do not leave undesirable anions in the additive-containing anionic clay which either have to be washed out or will be emitted as environmentally harmful gases upon heating.

Examples of suitable magnesium sources are oxides or hydroxides such as MgO and Mg(OH)₂, hydromagnesite, magnesium salts such as magnesium acetate, magnesium formate, magnesium hydroxy acetate, magnesium carbonate, magnesium hydroxy carbonate, magnesium bicarbonate, magnesium nitrate, magnesium chloride, magnesium-containing clays such as dolomite, saponite, sepiolite. Preferred magnesium sources are MgO and Mg(OH)₂; the most preferred magnesium source is MgO. Combinations of two or more of the above-mentioned magnesium sources may also be used. Examples of suitable zinc sources are zinc oxide, zinc hydroxide, zinc hydroxycarbonate, zinc carbonate, zinc bicarbonate, zinc salts such as zinc acetate, zinc formate, zinc hydroxy acetate, zinc nitrate, and zinc chloride. Combinations of two or more of the above-mentioned zinc sources may also be used. It is also contemplated to use a combination of at least one magnesium source and at least one zinc source.

The layered double hydroxide according to the present invention can be used for various applications. These include catalytic applications, such as the use as solid base catalyst in, e.g., aldol condensation, self condensation, Knoevenagel condensation, Claisen-Schmidt condensation, Michael addition, transesterification, alkylation, double bond isomerization, hydrogenation, amination, dehydrocyclodimerization, aldol addition, nitroaldol addition, conjugate addition of alcohols, cyanaethylation, Tishchenko reaction, nucleophilic ring opening of epoxides, oxidation reactions, Si-C bond formation, P-C bond formation (Pudovik reaction), and the synthesis of heterocycles.

Also contemplated is use as FCC (fluid catalytic cracking) additive for SOx and NOx reduction, for sulphur reduction in gasoline and diesel, and for hydroprocessing applications, including hydrodenitrification (HDN) and hydrodesulphurization (HDS) applications.

The layered double hydroxide according to the present invention can also be used as stabilizer in chlorine-containing (co)polymers such as PVC, as halogen scavenger, as adsorbent in waste water treatment, as flame retardant, and as active component in medicaments such as anti-acids.

### EXAMPLES

### Example 1

An aqueous slurry was prepared by mixing 700 grams of magnesium oxide (Zolitho R 40, ex Martin Marietta Magnesia 15 Specialties LLC 97% purity) and 1,324.12 grams of aluminium trihydroxide (Alumill F505) in 4,654 grams of demineralized water and grinding the mixture in a pearl mill to an average particle size (d50) of 2.80 µm. Subsequently, 1,250 grams of this milled slurry were fed to an oil-heated vessel (90°C) containing 1,250 grams of demineralized water. The reactor was closed and heated to 130°C within 60 minutes and this temperature was maintained for 3 days. In order to provide sufficient mixing, a stirrer speed of 500 rpm was applied in combination with a reactor geometry consisting of 3 Intermig stirrers and a bottom scraper. Finally, the autoclave was cooled to below 70°C within 1 hour and the resulting slurry was removed from the reactor.

A sample was dried and analyzed. According to 27Al-MAS nmr, 38% of the aluminium atoms were tetrahedrally coordinated.

According to XRD-analysis, the sample was almost pure, showing only small traces of boehmite (<1w%) and gibbsite (<1w%)

### Example 2

Using the same reactor geometry as depicted in Example 1, a layered double hydroxide with a Mg/Al ratio of 1.2 was prepared as follows. 700 grams of magnesium oxide (Zolitho R 40, ex Martin Marietta Magnesia 15 Specialties LLC 97% purity) and 1,324.12 grams of aluminium trihydroxide (Alumill F505) were mixed in 4,654 grams of demineralized water and ground in a pearl mill at a speed of 100 grams per minute to an average particle size (d50) of 2.50 µm. Then, 1,250 grams of this milled slurry were fed to an oil-heated vessel at 90°C which already contained 1,250 grams of demineralized water. After closing the reactor, the contents were kept at 90°C during 24 hrs. After sampling, the reaction mixture was heated to 130°C within 60 minutes, and this temperature was maintained for 3 days. After this period the autoclave was cooled to below 70°C within 1 hour and the resulting slurry was isolated.

Before heating to 130°C, a sample was taken and analyzed. According to 27AI-MAS nmr, <2% of the aluminium atoms were tetrahedrally coordinated. According to XRD-analysis, the sample was highly polluted with gibbsite (∼20w%).

After treatment at 130°C, virtually all gibbsite was converted (XRD: <1w%), and the resulting product contained 37% of terahedrally coordinated aluminium.

### Example 3

Using the same reactor geometry as depicted in Example 2, a layered double hydroxide with a Mg/Al ratio of 2.5 was prepared by heating at 90°C. The d50 of the starting slurry was 1.8 µm.

Subsequently aluminium trihydroxide was added, yielding an overall ratio of Mg/Al=1.35, and the resulting slurry was heated at 170°C for 6 hours.

According to XRD, the material showed a small amount of brucite as the only side product (∼3 w%). According to 27Al-MAS nmr, 38% of the aluminium atoms were tetrahedrally coordinated.

### Example 4-9

Following the same procedures and using the same experimental setup as described in Example 1, some additional experiments were performed with some experimental parameters being varied.

The various synthesis parameters, as well as the results, are summarized in the table below.

| # | Mg/Al | d50 µm | T °C | time | brucite | gibbsite | boehmite | Alₜₑₜ% |
|---|---|---|---|---|---|---|---|---|
| 4 | 1.2 | 2.3 | 170 | 24 hr | <2 wt% | 0 | 0 | 42 |
| 5 | 1.2 | 2.3 | 170 | 2 hr | 0 | <2 wt% | 0 | 37 |
| 6 | 1 | 2.4 | 180 | 6 days | 0 | 0 | ∼4 wt% | 34 |
| 7 | 1.2 | 2.5 | 200 | 6 days | <2 wt% | 0 | <2 wt% | 36 |
| 8 | 1.33 | 2.2 | 170 | 21 hr | 3% | 0 | 0 | 36 |
| 9 | 1.5 | 2.1 | 170 | 21 hr | 4% | 0 | 0 | 33 |

### Example 10

To 20 grams of the slurry synthesized in Example 8, 1 gram of solid CO₂ was added. After 1 hour, the material was dried and analyzed with IR-spectroscopy. Compared to a sample of CO₃-intercalated layered double hydroxide (Alcamizer 1, ex Kisuma), the intensity of the carbonate absorption peak was much smaller: ∼6% of the absorption in Alcamizer 1.

### Example 11

A dried sample of the material made in Example 8 was analyzed with IR-spectroscopy. When fully exchanged, the material appeared to contain 4% of the maximum CO₃ content possible,.

Subsequently the material was stored in CO₂-atmosphere for 24 hrs. After this treatment, according to IR, the material contained 6% of the maximum CO₃ content possible, thereby showing that the layered double hydroxide according to the present invention has only very limited exchange capabilities.

### Comparative Example A

A dried sample of the material made in Example 3 - before the addition of aluminium trihydroxide - was analyzed with IR-spectroscopy. The material appeared to contain 5% of the maximum CO₃ content possible when fully exchanged.

Subsequently the material was stored in a CO₂-atmosphere for 24 hrs. After this treatment, according to IR, the material was fully converted into CO₃-intercalated layered double hydroxide.

### Example 12

A dried sample of the material made in Example 8 was heated for 24 hours at 200°C.

XRD diffraction was performed on the material before and after heat treatment. The resulting patterns were fully identical; showing an unaltered d-spacing of 0.74 nm, thereby illustrating that the layered double hydroxide according to the present invention has only very limited exchange capabilities .

### Comparative Example B

A dried sample of the material made in Example 3, before the addition of aluminium trihydroxide, was heated for 24 hours at 200°C in vacuum.

XRD diffraction was performed on the material before and after heat treatment. The resulting patterns were significantly different, the most important difference being that the d-spacing strongly decreased: initially 0.75 nm, after heat treatment 0.67 nm, showing significant exchange capabilities.

### Example 15

The product of Example 2, after heating at 130°C, was used in the aldol synthesis of dibenzalacetone. 495 g of a slurry containing product - with a solids content of 13.77 wt% - were charged into a glass-lined reactor. Stirring was started and 342 grams of ethanol were added to the reactor while keeping the contents at ambient temperature. Next, one-half of a mixture containing 72.25 grams of benzaldehyde and 19.76 grams of acetone was dosed to the reactor. After 15 minutes the remaining amount of the benzaldehyde/acetone mixture was dosed, followed by a post-reaction time of 2 hrs. During this period the contents of the reactor turned yellow, indicating the formation of dibenzalacetone. After isolation of the reactor contents the product became more yellow during storage at ambient temperature, indicating that conversion still had not been completed.

The product was isolated from the mixture by extraction with dichloromethane.

NMR analysis revealed the formation of a mixture of dibenzalacetone and benzalacetone, thereby showing that the layered double hydroxide according to the present invention is a suitable catalyst for aldol condensations and, hence, a suitable base catalsyst.

## Claims

1. Layered double hydroxide containing brucite-like main layers alternating with interlayers, said brucite-like main layers containing at least one trivalent metal and at least one divalent metal selected from the group consisting of Mg, Zn, and Ni, and said interlayers comprising a tetrahedrally coordinated trivalent metal.

2. Layered double hydroxide according to claim 1 wherein said trivalent metal is aluminium.

3. Layered double hydroxide according to claim 1 or 2 wherein the divalent metal is magnesium.

4. Process for the preparation of a layered double hydroxide according to any one of the preceding claims wherein a slurry comprising (i) an existing layered double hydroxide containing brucite-like main layers containing at least one trivalent metal and at least one divalent metal selected from the group consisting of Mg, Zn, and Ni and (ii) a trivalent metal source is solvothermally treated; the molar ratio divalent metal/trivalent metal in the slurry being in the range from 0.7 to 1.6.

5. Process according to claim 4 wherein the existing layered double hydroxide contains hydroxyl anions in the interlayer.

6. Process for the preparation of a layered double hydroxide according to any one of claims 1-3 wherein a slurry or solution comprising at least one trivalent metal source and at least one divalent metal source selected from magnesium sources, zinc sources, and nickel sources is solvothermally treated; the molar ratio divalent metal/trivalent metal in the slurry or solution being in the range from 0.7 to 1.6.

7. Process according to any one of claims 4-6 wherein the molar ratio divalent metal/trivalent metal is in the range 0.8 to 1.2.

8. Process according to any one of claims 4-7 wherein the divalent metal is Mg.

9. Process according to any one of claims 4-8 wherein the trivalent metal is Al.

10. Process according to claim 8 wherein the divalent metal source is selected from the group of magnesium oxide and magnesium hydroxide.

11. Process according to claim 9 wherein the trivalent metal source is selected from the group consisting of aluminium trihydroxide, boemite, pseudoboehmite, and bauxire ore concentrate (BOC).

12. Use of a layered double hydroxide according to any one of claims 1-3 as solid base catalyst.
